(19) Europäisches Patentamt
European Patent Office
Office européen des brevets

(11) **EP 4 199 307 B1**

(12) **EUROPEAN PATENT SPECIFICATION**

(45) Date of publication and mention
of the grant of the patent:
**05.02.2025 Bulletin 2025/06**

(51) International Patent Classification (IPC):
*H02J 50/40* (2016.01)    *H02J 50/10* (2016.01)
*H02J 50/12* (2016.01)

(21) Application number: **22212756.5**

(52) Cooperative Patent Classification (CPC):
**H02J 50/402; H02J 50/12**

(22) Date of filing: **12.12.2022**

(54) **RESONANT WIRELESS POWER TRANSFER CHARGING PAD FOR UNPLANAR DEVICES**

RESONANTES DRAHTLOSES LEISTUNGSÜBERTRAGUNGSLADEPAD FÜR NICHTPLANARE VORRICHTUNGEN

PLOT DE CHARGE DE TRANSFERT D'ÉNERGIE SANS FIL RÉSONANT POUR DISPOSITIFS NON PLANS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.12.2021 US 202117551025**

(43) Date of publication of application:
**21.06.2023 Bulletin 2023/25**

(73) Proprietor: **Datalogic IP TECH S.r.l.**
**40012 Lippo di Calderara di Reno (BO) (IT)**

(72) Inventors:
• **Pifferi, Marco**
**40069 Zola Predosa (Bologna) (IT)**
• **Frascolla, Giuseppe Pio**
**I-40124 Bologna (IT)**
• **Pugliese, Francesco**
**40133 Bologna (IT)**

(74) Representative: **Porta & Consulenti Associati S.p.A.**
**Via Vittoria Colonna, 4**
**20149 Milano (IT)**

(56) References cited:
WO-A1-2014/102883    WO-A1-2017/126419
US-A1- 2014 197 694    US-B2- 9 270 342

**Description**

**BACKGROUND**

Every wireless power transfer (WPT) system includes a transmitter (Tx) and receiver (Rx). The Tx performs a power conversion from an electrical power source into an AC power signal with certain electrical characteristics, such as amplitude, frequency, etc., and wirelessly transfers the AC power signal to the Rx. The Rx performs a power conversion from the AC power signal received from the Tx into a DC power signal to be provided to a load, such as a rechargeable battery of a wireless device. The transmitter and receiver may be part of an inductive wireless transfer system in which the AC power signal is inductively transferred from the transmitter to the receiver. To adapt the transmitted power at the need of the load, conventional WPT systems must provide an out-of-band communication channel between the transmitter and receiver.

Wireless power transfer systems may be categorized as either inductive or resonant. The main user experience difference between inductive and resonant technology is that in the first one, a perfect alignment between Tx and Rx coils is required in order to enable power transfer, instead in the resonant one, due to the different working condition, lower coupling and less precision is necessary. Free positioning solutions can be realized with both the technologies. There are generally known three types of free positioning WPT systems, including (i) guided positioning, (ii) free positioning with moveable primary coil, and (iii) free positioning with a coil array. In guided positioning, a receiver device is attracted to a transmit coil position by using a magnetic attractor to achieve an accurate alignment between the Tx coil and Rx coil. However, eddy current and power losses degrade the power transfer and the device must be place in the correct position. In free positioning with movable primary coil, the transmit coil may detect the position of the receiver and move there to be magnetically coupled. However, the movable primary coil requires an algorithm position detection and motor control, which may be complex and costly. In free positioning with a coil array, the transmit pad is composed of a multitude of smaller transmit coils. However, the inductors may interfere with each other, thereby degrading the power transfer, and the high number of inductors may be costly. Moreover, all of the above embodiments are only compatible with a smartphone-like receiver, characterized by only one stable position. WPT systems are disclosed for example by WO 2014/102883, US 2014/197694, WO 2017/126419 and US 9 270 342.

**SUMMARY**

To overcome the limitations of conventional wireless power transfer systems (e.g. magnets, moveable coils, multiple coils, control systems, etc.), the principles described herein enable the use of wireless power transfer using resonance charging with inductive coupling for a wireless charging device, such as in the form of a charging pad, on which an irregularly or unplanar (i.e., a non-planar or non-planar form factor) shaped electronic device, may be placed. The unplanar shaped electronic device includes a barcode scanner. Because unplanar electronic devices tend not to have flat surfaces that easily rest on a flat wireless charging device, receiver (Rx) coils may be configured in physical features of the devices that (i) conform to the housings of the unplanar electronic devices and (ii) enable sufficient wireless power transfer from a transmit (Tx) coil of a flat wireless charging device.

In a first aspect, the present invention relates to a wireless barcode scanner device according to claim 1. In a further aspect, the present invention relates to a wireless power transfer system according to claim 9, comprising the wireless barcode scanner device according to the first aspect and a wireless charging device for powering the wireless barcode scanner device. The wireless charging device may have transmitter coils that are three-dimensional (3D) and are specifically configured to support WPT for unplanar electronic devices or unplanar devices such that tolerances for alignment of the receiver coils of the wireless devices with the transmitter coils are less restrictive than alignment tolerances of conventional WPT Tx and Rx coils to support power transfer. It is noted that the Rx coils may be positioned within the electronic device in regions that are larger (e.g., scanner head) than smaller (e.g., handle) so that there is more area for the Rx coils to be larger (e.g., 2D dimensionally larger, such as a larger diameter), thereby increasing WPT power transfer and efficiency. Utilizing the principles described herein, cost is reduced and wireless power and transfer is increased independent of placement of the wireless devices on the wireless charging device.

In an embodiment of the wireless device the first and second receive coils may be configured to operate at a resonant frequency. A first rectifier circuit may be electrically coupled with the first receive coil. A second rectifier circuit may be electrically coupled with the second receive coil and be in parallel with the first rectifier.

According to an embodiment, in the wireless device the second plane is perpendicular to the first plane.

According to an embodiment, in the wireless device the second plane is oriented in parallel with the first plane. According to this embodiment, the first and second coils are preferably electrically coupled in anti-series such that the currents induced in the first and second coils add constructively.

Preferably, the device housing of the wireless device further includes a third surface and the wireless device further comprises a third receive coil spaced apart from the first receive coil and in alignment with the third surface of the device housing, the third receive coil extending in a third plane different from the first and second planes and configured to inductively receive wireless power signals.

More preferably, the device housing encloses the first, second, and third receive coils, and the first surface is substantially parallel with the first plane; the second surface is mechanically coupled to the first surface, and is substantially parallel with the second plane; and the third surface is mechanically coupled to the first surface, and is opposite the first surface from the second surface, and wherein the third surface is substantially parallel with the third plane.

Even more preferably, the second and third coils are electrically coupled in anti-series such that the currents induced in the second and third coils add constructively.

Preferably, in the wireless device the first and second receive coils are configured to receive the wireless power signal from a wireless charging device having a flat surface on which either of the first or second surfaces of the wireless device are placed, the wireless charging device including a transmit inductor having a dimension greater or equal than a dimension of the first receive coil.

Preferably, the first layer and the second layer of the wireless charging device are vertically aligned.

Preferably, in the wireless charging device the total number of turns of the combination of the first and second transmit coils is four.

Preferably, in the wireless charging device the first and second transmit coils are circular and printed on a printed circuit board.

Preferably, in the wireless charging device the second transmit coil has an inner dimension that is greater than the outer dimension of the first transmit coil.

Preferably, in the wireless charging device the second transmit coil is concentrically aligned with the first transmit coil.

Preferably, the wireless charging device further comprises a power regulation circuit in electrical communication with first and second transmit coils, wherein the power regulation circuit is configured to sense a current resulting from a receive inductor of a wireless device being electromagnetically coupled to the transmit inductor.

Preferably, the power regulation circuit includes a feedback circuit to regulate a power transmitted by the transmit inductor based on the sensed current, the feedback circuit regulating the power independent of a second channel of communication between the wireless charging device and the wireless device.

According to an embodiment, the wireless device further comprises a third receive coil electrically coupled in anti-series with the second receive coil such that the signals received by the second and third receive coils are added together; the third receive coil being electrically coupled to the second rectifier along with the second receive coil.

According to an embodiment, in the wireless device the first receive coil extends in a first plane that is perpendicular to the second and third planes that are in parallel with one another.

## BRIEF DESCRIPTION OF THE DRAWINGS

Illustrative embodiments are described in detail below with reference to the attached figures, which are incorporated by reference herein and wherein:

**FIGS. 1A** and **1B** are perspective views of an illustrative wireless power charging environment according to the invention;

**FIG. 2A** is a planar view of a transmit inductor of an illustrative wireless charging device that can be used in a wireless power transfer system according to the invention, where the transmit inductor is three-dimensional and configured in a rectangular shape;

**FIG. 2B** is a planar view of a transmit inductor of an illustrative wireless charging device that can be used in a wireless power transfer system according to the invention, where the transmit inductor is three-dimensional and configured in a circular shape;

**FIG. 3** is a perspective view of a connection between two layers of a transmit inductor of an illustrative wireless charging device that can be used in a wireless power transfer system according to the invention;

**FIG. 4** is an illustration of a block diagram of an illustrative wireless power system according to the invention for transmitting a wireless power signal between a transmitter of a wireless charging device and a receiver of a load, such as a barcode reader with a rechargeable battery;

**FIG. 5** is an illustration of a block diagram of an illustrative transmitter of a wireless charging device that can be used in a wireless power transfer system according to the invention;

**FIG. 6** is an illustration of a circuit diagram of an illustrative power conversion circuit of a transmitter of the wireless charging device that can be used in a wireless power transfer system according to the invention;

**FIG. 7A** is a perspective view of an illustrative wireless device according to the invention;

**FIG. 7B** is a perspective view of the wireless device of **FIG. 7A** with coils connected in an anti-series configuration; and

**FIG. 8** is a circuit diagram of an illustrative receiver of a wireless device according to the invention.

## DETAILED DESCRIPTION

Disclosed herein are embodiments of a system and method for using resonant technology to transfer wireless power to a receiver that may be oriented in one of multiple ways. Embodiments of the system and method include inductors that resonate in the megahertz range, allowing forming the transmit inductor on printed circuit board, which may improve cost and precision of the production process. Embodiments of the system and method include an unplanar wireless device having at least two receive coils extending in different axes. The wireless device may have at least two receive coils electrically coupled in anti-series such that currents induced in the receive coils add constructively. Embodiments of the system and method may include a wireless charging device having a transmit inductor with a first transmit coil in a first layer and a second transmit coil in a second layer separate from the first layer, where the first transmit coil is vertically aligned with the second transmit coil. The transmit inductor may include four turns in an embodiment. It has been found that implementations tested with four turns resulted in the highest magnetic induction and magnetic field strength. However, different numbers of turns may be utilized, and that it is possible that alternative configurations of the Tx and Rx coils may result in higher magnetic induction and field strengths.

The transmit inductor may include a spacing between inner turns that may be greater than a spacing between outer turns to improve coupling of a magnetic field from the transmit inductor to one or more of the receive coils. The transmit inductor may include a vertical spacing between the first coil and the second coil greater than 1mm, which may flatten the magnetic field. Each coil may have a thickness greater than $35\mu m$, which may mitigate a cross-section reduction of the quality factor due to skin effect. Embodiments of the system and method include a power regulation circuit with a feedback loop in the charging device that may maintain a magnitude of the wireless power under varying load conditions. The Tx coil may be larger than the Rx coil (e.g., the Tx coil may have a larger diameter than the Rx coil). Embodiments of the present disclosure may be achieved without magnets, movable coils, a control system, or a plethora of coils, thereby being less complex and less expensive.

### Wireless Power Transfer System

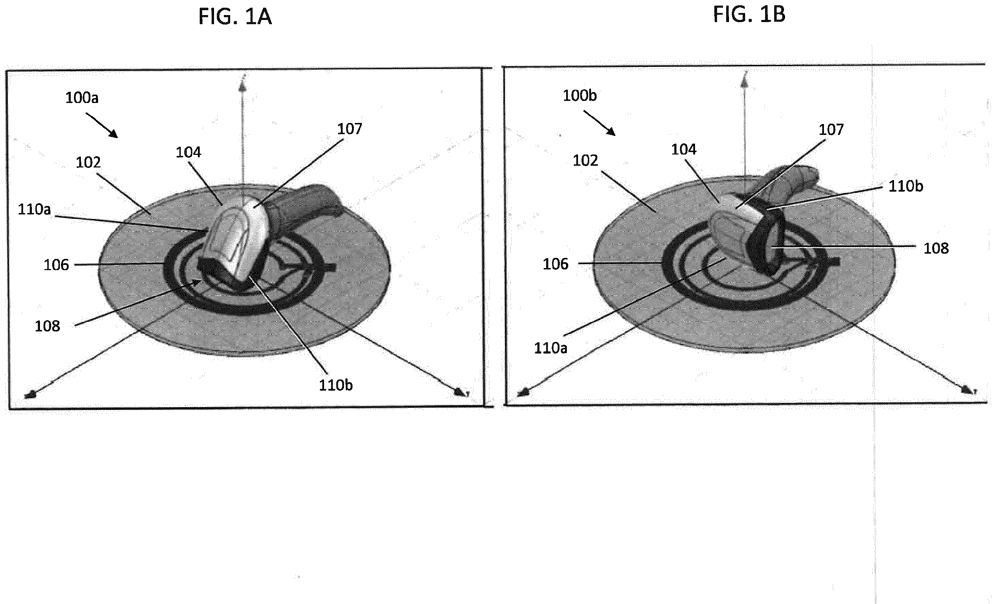

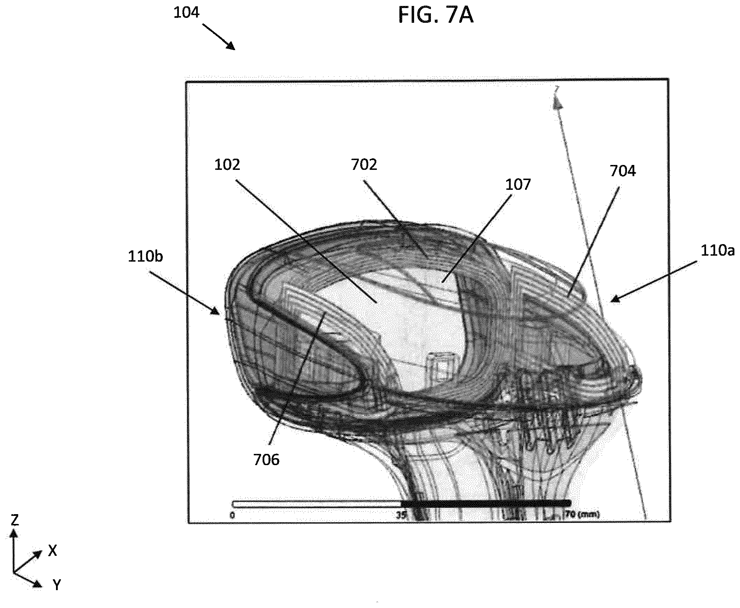

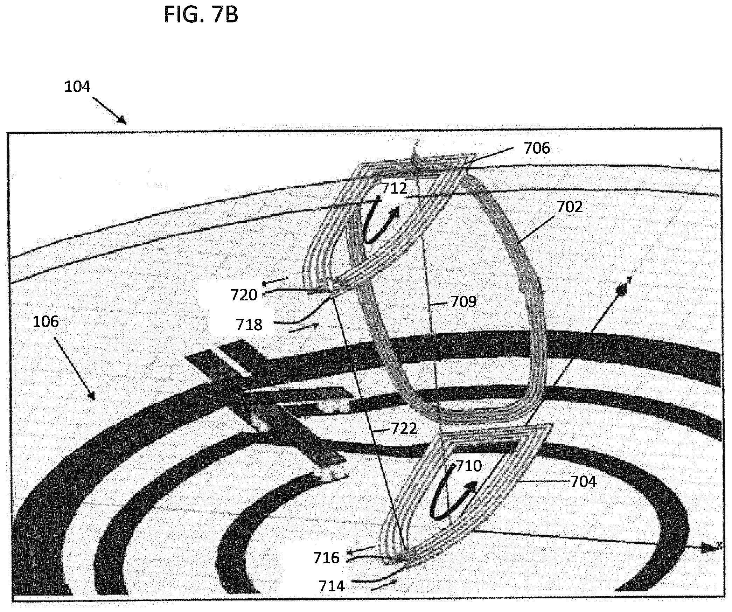

**FIGS. 1A** is a perspective view of an illustrative wireless power charging environment **100a.** The wireless power charging environment **100a** includes a wireless charging device **102** (e.g., charging pad) and a wireless device **104,** in the form of a barcode reader. The wireless device **104** is shown to have an irregular shape, such that it is difficult or not possible to lay any portion of the wireless device **104** flat against the wireless charging device **102** such that a receiver inductor is realized in a three-dimensional (3D) shape, as further described herein (see **FIGS. 7A** and **7B,** for example).

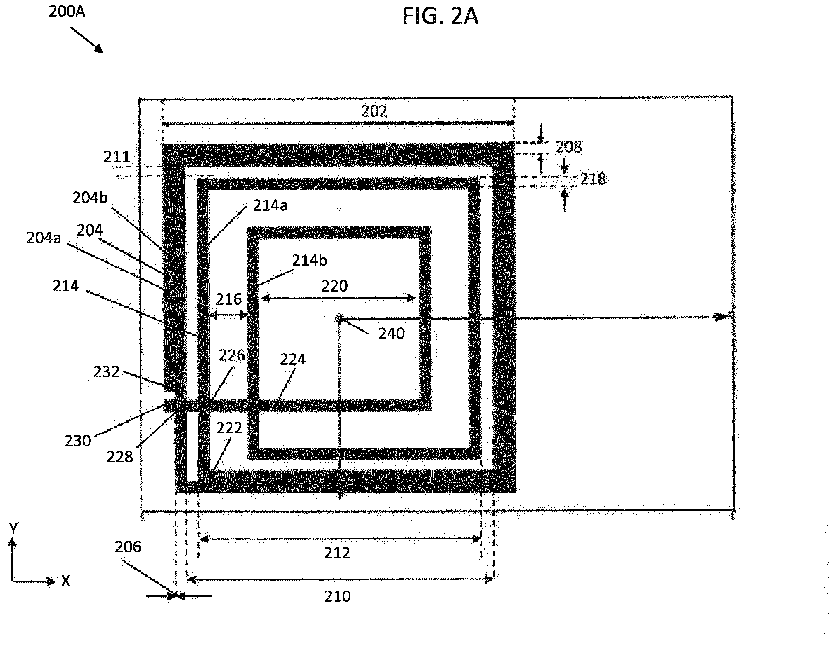

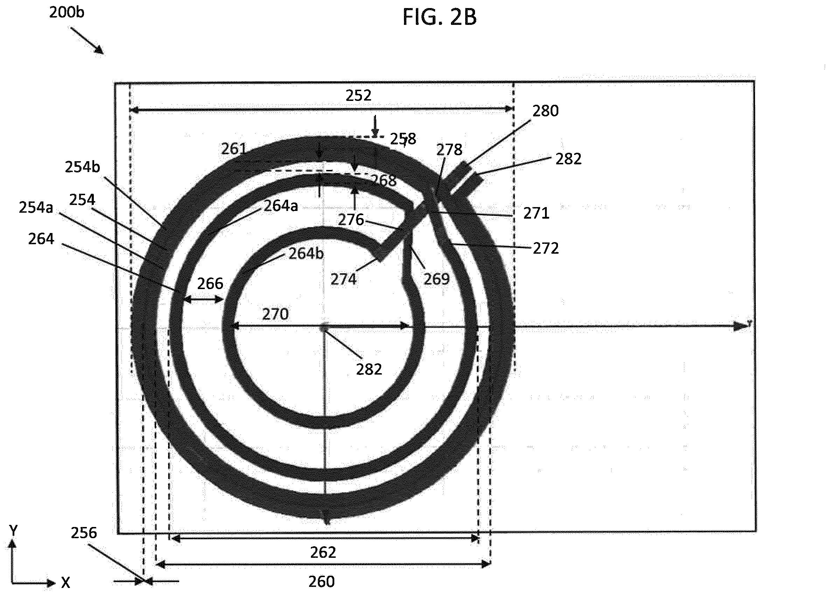

The wireless charging device **102** inductively transfers a wireless power signal (not shown) to the wireless device **104.** The wireless charging device **102** includes a transmit inductor **106,** in this case a circular transmit inductor. Upon placing a receive inductor of the wireless device **104** in proximity and oriented properly with a transmit inductor **106** of the wireless charging device **102,** the transmit inductor **106** may transfer the wireless power signal to the receive inductor of the wireless device **104.** The use of circularly configured transmit inductors generally results in higher efficiency (Q) of inductive charging, but alternatively shaped transmit inductors are contemplated (see, for example, **FIG. 2).**

The wireless device **104** includes device housing **107.** The device housing **107** may include a frontal surface **108** that includes a window frame **109a** and window **109b** for enabling a scanner or imager (not shown) to image machine-readable indicia (e.g., barcodes) thereby. Upon placing the frontal surface **108** of the wireless device **104** in proximity and inductively coupled with the transmit inductor **106** of the wireless device **104,** the transmit inductor **106** may inductively transfer the wireless power signal to a first receive coil within the device housing **107** and disposed behind the frontal surface **108.** In some embodiments, the frontal surface **108** is placed in parallel or substantially parallel with the transmit inductor **106.** The first receive coil may be parallel or substantially parallel with the frontal surface **108** (see **FIGS. 7A** and **7B),** thereby being inductively coupled with the transmit inductor **106** when placed on the wireless charging device **102** as shown in **FIG. 1A.** It should be understood that the first receive coil extending along the frontal surface **108** may include more than one receive coil.

The device housing **107** further includes lateral surfaces **110a** and **110b** (collectively **110).** The lateral surfaces **110** are coupled to the frontal surface **108.** A second receive coil may be within the device housing **107** and disposed behind the lateral surfaces **110** (see **FIGS. 7A** and **7B).** In some embodiments, upon placing the frontal surface **108** of the wireless device **104** in proximity with the transmit inductor **106** of the wireless device **104,** little or none of the wireless power signal is inductively transferred to the second receive coil disposed behind the lateral surface **110,** as a result of the second receive coil being perpendicular to the transmit inductor **106.** The second receive coil may be adjacent to and parallel or substantially parallel (e.g., within a few degrees) with the lateral surface **110.**

The transmit inductor **106** (e.g., as well as the receive coils) may resonate at a predefined frequency. A resonant frequency may be defined as a frequency at which inductance cancels with capacitance, thereby providing maximum power to a load. The predefined frequency may be in the megahertz range), which may allow for the transmit inductor **106** to be formed on a printed circuit board, which may improve cost and precision of the production process. In some embodiments, the predefined frequency is in an industrial, scientific, and medical (ISM) band centered at 6.78 megahertz (MHz). The receive coils may resonate at or substantially near (e.g., within 1 kilohertz (kHz) or 5 kHz of) the predefined frequency. A magnitude wireless power transferred may be at least based on the coupling factor k, which is between 0 and 1. The coupling factor k represents a fraction of magnetic field lines generated by the transmit inductor **106** that intersect one or more of the receive coils. The coupling factor k may increase as a distance between the transmit inductor **106** and the receive coils is reduced. The coupling factor may also be affected by the physical characteristics of the transmit inductor **106,** which are described below with respect to **FIGS. 2A-2B.**

The wireless charging device **102** may include one or more shields (not shown) disposed below the transmit inductor **106** (e.g., opposite the transmit inductor **106** from the wireless device **104** having receive coils or receive inductor (see **FIGS. 7A** and **7B,** for example) electromagnetically coupled to the transmit inductor **106).** A first shield may include aluminum. The shield may be coupled to a ground plane (not shown) located below the transmit inductor **106.** The first shield may prevent capacitive coupling between the transmit inductor **106** and objects near the wireless charging device **102,** thereby preventing a shift in the resonance frequency. A second shield may include ferrite. The second shield may concentrate magnetic field lines inside of the second shield. The second shield may further prevent interaction between the magnetic field of the transmit inductor **106** and metal objects near the wireless charging device **102,** thereby also preventing a shift in the resonance frequency. The second shield may reduce a percentage of dispersed flow of the magnetic field, thereby increasing a quality factor of the transmit inductor **106.** The quality factor may be defined as a ratio of the (series) imaginary impedance (e.g., angular frequency times inductance) and the (series) real impedance (e.g., resistance). In some embodiments, a shield may include a layer of aluminum material and a layer of ferrite material.

**FIGS. 1B** is a perspective view of a wireless power charging environment **100b.** The wireless power charging environment **100b** may be similar to the wireless power charging environment **100a** except that the wireless device **104** is rotated such a lateral surface **110a** is placed in proximity with the transmit inductor **106** of the wireless device **104.** By placing the lateral surface **110a** of the wireless device **104** in proximity with the transmit inductor **106** of the wireless device **104,** the transmit inductor **106** may transfer the wireless power signal to the second receive coil(s) disposed behind the lateral surface **110.** In some embodiments, the lateral surface **110** is placed in parallel or substantially parallel with the transmit inductor **106.** It should be understood that if the receive coils are in inductive relation with the transmit inductor **106** so as to create an inductive coupling that the wireless power signal may be inductively transferred, as further described herein.

**Wireless Charging Device that may be used in the WPT system according to the invention**

A wireless charging device may be flat and inclusive of a transmit coil that is three-dimensional (3D) (e.g., formed of two coils on different layers spaced vertically apart from one another and arranged to collectively and inductively transfer wireless power signals therefrom). It should be understood that for the purposes of irregular shaped wireless devices, such as barcode scanners, that resonant technology may provide higher performance than conventional inductive technology. Working at higher frequency (6.78 MHz instead 130 kHz), it is possible to realize coils on a printed circuit board (PCB) support rather than being wrapped up or wound, thereby reducing cost and improving precision of the production process.

As will be described, one parameter of a wireless power system is the coupling k between Tx and Rx coils. The coupling k is a number between 0 and 1, and represents the fraction of magnetic field lines generated by the Tx coil that intersect the Rx coil area. The coupling k parameter depends on several other parameters, such as shape and the geometry of the coils, distance between the coils, alignment of the coils, and the area ratio between or among the Tx and Rx coils. The ideal condition is to have the two coils with the same dimension, but having the Tx and Rx coils be the same dimension with irregular shaped wireless devices is difficult or not possible, and is incompatible with free positioning. Another problem connected to inductive coupling using a flat wireless charging device and irregular shaped wireless device is that the inductive coupling should be constant across the surface of the wireless charger in order to provide the same power or about the same power (e.g., within a few dB) to the receiver, thereby avoiding high and low efficiency region.

Based on the constraints for wirelessly charging an irregularly shaped wireless device using a flat wireless charger, the TX coil characteristics should be dimensionally large enough to allow free positioning of the wireless device, but maintaining good coupling and with a relatively constant magnetic field at the surface of the wireless charging device.

Such considerations are further described in detail hereinbelow.

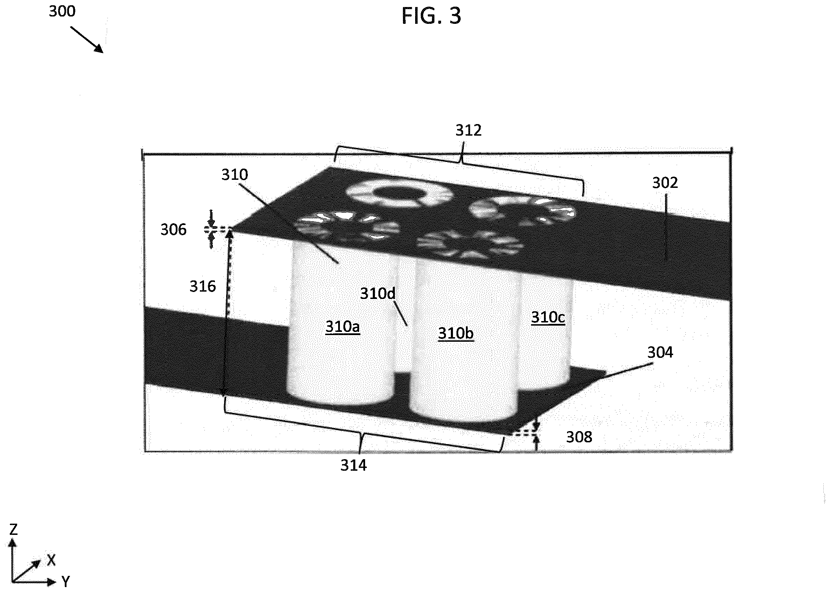

FIG. 2A is a planar view of an illustrative transmit inductor **200a** of a wireless charging device **102.** In an embodiment, the transmit inductor **200a** may be implemented in a rectangular shape. The transmit inductor **200** may be a three-dimensional inductor (formed by multiple coils) with a first coil on a first layer and a second coil on a second layer (see FIG. 3). The transmit inductor **200a** may be formed of copper, aluminum, or any suitable conductive material for inductors. The transmit inductor **200a** includes a first coil **204.** The coil **204** is disposed in or on a first layer. For the purposes of this disclosure, a coil being disposed on a layer means that the coil may be pointed on a surface or contained within another material that forms the layer. The coil **204** may include a first turn **204a** and a second turn **204b** (collectively **204**). Each turn may include four (4) sides. The coil **204** may include an outer length **202.** In some embodiments, the outer length **202** is between 12 centimeters (cm) and 20 cm. In some embodiments, the outer length **202** is approximately 16 cm (*e.g.*, 16+/- 1 cm.), which is a good compromise between being having a large surface area and providing good electromagnetic coupling. In some embodiments the outer length **202** is greater or equal than any dimension (e.g., length, width, height, diameter, etc.) of receive coils in the wireless device **104.** The coil **204** may include a horizontal spacing **206** (e.g., distance, space) between the turn **204a** and turn **204b.** Each of the coils in the turns **204** may have a width **208.** In some embodiments, the width **208** is between 2 millimeters (mm) and 12mm. In an embodiment, the width **208** may be about 5mm, where being about 5mm is between 4.8mm and 5.2mm or 5 percent, for example. Having a greater width of a turn, such as the width **208,** may improve the quality factor (e.g., reduce the parasitic resistance) of an inductor such as the transmit inductor **200a.** The coil **204** may include an inner length **210.** Although FIG. 2A shows the coil **204** including two turns **204a-204b,** the coil **204** may have more or fewer turns while remaining in the scope of the disclosure. It should also be understood that more than two coils disposed on more than two spaced layers is possible.

The transmit inductor **200a** includes a second coil **214** electrically coupled to the coil **204.** The coil **214** is disposed on a second layer. The first layer may be disposed over the second layer (e.g., the coil **204** may be disposed over the coil **214**). The coil **214** may be vertically spaced and concentrically aligned with the coil **204.** That is, the coil may have a same center point **240** (e.g., midpoint), in a plane defined by two lateral directions (e.g., the X-direction and Y-direction), as the coil **204.** Furthermore, in being concentrically aligned, center points of the first and second coils **204** and **214** may be aligned vertically with one another. In being aligned vertically, because the coils **204** and **214** are not identical, small differences (e.g., within a few millimeters) is adequate to be concentrically aligned and still provide proper electromagnetic performance. It should be understood that alignment of the first and second coils **204** and **214** may have a variety of configurations and provide the same on analogous functionality and/or electromagnetic properties. For example, the coils **204** and **214** may not be concentrically aligned, but collectively inductively output wireless power signals sufficient for wirelessly powering a wireless device (e.g., recharging a rechargeable battery).

The coil **214** may include a turn **214a** and a turn **214b.** Each turn may be rectangular (e.g., each turn may include 4 sides). The coil **214** may include an outer length **212.** The outer length **212** may be less than the inner length or diameter **210** of the coil **204.** The transmit inductor **200a** may include a horizontal spacing **211** in between the outer length **212** of the coil **214** and the inner length **210** of the coil **204.** The horizontal spacing **211** may be greater than the spacing **206.** Having a smaller spacing, such as the spacing **206,** between outer turns **204a** and **204b** may cause a quicker drop in a magnetic field of an outer region of an inductor such as the transmit inductor **200a,** thereby improving the coupling factor k. The coil **214** may include a spacing **216** between the turn **214a** and the turn **214b.** The spacing **216** may be greater than the spacing **211.**

In general, the distance between adjacent turns increases from the outside turn **204a** moving towards the center turn **214b,** and the spacing is really small for the external traces (i.e., between turns **204a** and **204b**). Compatibly with the minimum distance between copper may be specified by the manufacturer. The small spacing causes a quick drop of the magnetic field in the external region of the transmit inductor, and higher in the center in order to strengthen the magnetic field in the center region. Each of the coils in the turns **214a-214b** may have a width **218.** In some embodiments, the width **218** of the coil is between 2mm and 12mm. The coil **214** may include an inner length **220.** Although FIG. 2A shows the coil **214** as including two turns **214a-214b,** the coil **214** may have more or fewer number of turns while remaining in the scope of the disclosure.

The transmit inductor **200a** may include a connection **222.** The connection **222** may electrically couple the turn **204b** of coil **204** to the turn **214a** of coil **214.** A connection, such as the connection **222,** is further described with respect to FIG. 3. The transmit inductor **200a** may include a connection **224** between the turn **214b** of coil **214** to an overpass **226** in the first layer. The overpass **226** may be disposed over the turn **214a** of the coil **214.** The overpass **226** may be coupled to an underpass **228** in the second layer. The turn **204b** may be disposed over the underpass **228.** The transmit inductor **200a** may include a terminal **230** and a terminal **232.** The terminals **230-232** may be in the first layer. The terminal **230** may be coupled to the underpass **228.** The terminal **232** may be coupled to the turn **204a.**

Directly correlated to the efficiency of the wireless charging system is resistance of the coil. To reduce the resistance of the coil and increase the quality factor Q-Tx, the following considerations may be considered: (i) maximizing the width of the traces of the transmit and/or Rx coils, and (ii) using $70\mu m$ copper thickness instead of standard $35\mu m$ to overcome the cross-section reduction due to the skin effect in the traces.

Another consideration on the Tx side may include changing the shape, such as changing the square coil to be a round coil, which is generally characterized by a greater Q. In fact, the total length of the trace of the coils of a circular coil is smaller and the magnetic field result is more constant, thereby avoiding non-uniformity zones in the corner of the square coils. The final shape of the Tx is described hereinbelow with regard to **FIG. 2B**.

**FIG. 2B** is a planar view of a transmit inductor **200b** of the wireless charging device 102. The transmit inductor **200b** may be similar to the transmit inductor **200a** except the transmit inductor **200b** may be implemented in a circular shape. The transmit inductor **200b** may be an implementation of the transmit inductor 106. The transmit inductor **200b** may be formed of copper, aluminum, or any suitable material for inductors. The transmit inductor **200b** includes a first coil **254**. The coil **254** is disposed in a first layer. The coil **254** may include a turn **254a** and a turn **254b**. The coil **254** may include an outer diameter **252**. In some embodiments, the outer diameter **252** is between 12 cm and 20 cm. In some embodiments, the outer diameter **252** is 16 cm. In some embodiments the outer diameter **252** is greater than or equal to any dimension of the receive coils in the wireless device **104**. The first coil **254** may include a spacing **256** between the turn **254a** and the turn **254b**. Each of the turns **254a-254b** may include a width **258**. In some embodiments, the width **258** of the coil **254** is between 2mm and 12mm. The coil **254** may include an inner diameter **260**. Although **FIG. 2B** shows the coil **254** as including two turns **254a-254b**, the coil **254** may have more or fewer number of turns while remaining in the scope of the disclosure, and more than two coils on more than two layers is also possible.

The transmit inductor **200b** includes a second coil **264** coupled to the first coil **254**. The coil **264** is disposed in a second layer. The first layer may be disposed over the second layer (e.g., the coil **254** may be disposed over the coil **264)**. Such that the coil **264** may be considered vertically oriented with the coil **254**. That is, the coil may have a same center point **290** (i.e., concentrically aligned), in a plane defined by two lateral directions, as the coil **254**, as previously described with regard to **FIG. 2A**.

The coil **264** may include a turn **264a** and a turn **264b**. Each turn may be circular. The coil **264** may include an outer diameter **262**. The outer diameter **262** may be less than the inner diameter **260** of the coil **254**. The transmit inductor **200b** may include a spacing **261** in between the outer diameter **262** of the coil **264** and the inner diameter **260** of the coil **254**. The spacing **261** may be greater than the spacing **256**. The coil **264** may include a spacing **266** between the turn **264a** and the turn **264b**. The spacing **266** may be greater than the spacing **261**. Each of the turns **264a-264b** of the coil **264** may have a width **268**. In some embodiments, the width **268** is between 2mm and 12mm. The coil **264** may include an inner diameter **270**. Although **FIG. 2B** shows the coil **264** as including two turns **264a-264b**, the coil **264** may have a more or fewer number of turns while remaining in the scope of the disclosure.

The transmit inductor **200b** may include an underpass **269** in the second layer. The underpass **269** may electrically couple the turn **264a** to the turn **264b**. The transmit inductor **200a** may include an overpass **271** in the first layer. The overpass **271** may electrically couple to the turn **254b**. The transmit inductor **200b** may include a connection **272**. The connection **272** may couple the overpass **271** to the turn **264a**. A connection such as connection **272** is further described with respect to **FIG. 3**. The transmit inductor **200b** may include a connection **274** between the turn **264b** to an overpass **276** in the first layer. The overpass **276** may be disposed over the underpass **269**. The overpass **276** may be coupled to an underpass **278** in the second layer. The overpass **271** may be disposed over the underpass **278**. The transmit inductor **200b** may include a terminal **280** and a terminal **282**. The terminals **280-282** may be in the first layer. The terminal **280** may be coupled to the underpass **278**. The terminal **282** may be coupled to the turn **264a** of the coil **264**.

**FIG. 3** is a perspective view of a portion of the wire charging device **102** showing a connector **300** between two layers **302** and **304** of the transmit inductor **106** of the wireless charging device **102**. The connection **300** may be between a top layer **302** and a bottom layer **304**. The top layer **302** may have copper traces of the coils (see **FIGS. 2A** and **2B)** with a thickness **306** in a vertical direction (e.g., the Z-direction) and the bottom layer **304** may have a thickness **308** in the vertical direction. The thickness **306** and the thickness **308** of the copper traces may each be greater than $35\mu m$, which may overcome a cross-section reduction of the quality factor of the respective layers that is due to skin effect. In some embodiments, each of the thickness **306** and the thickness **308** of the copper traces has a value in a range of $60\mu m$ and $80\mu m$. In some embodiments, each of the thicknesses **306** and **308** has a value of approximately $70\mu m$ (e.g., about $70\mu m$). In alternative embodiments, thicknesses **306** and **308** may have values about $35\mu m$, $105\mu m$, or $135\mu m$. Alternative thickness may also be possible. It should be understood that alternative spacing of the layers **302** and **304** are possible and may provide alternative functional performance.

The connection **300** may include a number of vias **310** extending in a vertical direction. The vias **310** electrically couple a portion **312** of a coil (e.g., coil **254**) on the top layer **302** to a portion **314** of a coil (e.g., coil **264**) on the bottom layer **304**. The portion **312** may be disposed over the portion **314**. The vias **310** may include a via **310a**, a via **310b**, a via **310c**, and a via **310d** (collectively **310**). The vias **310** may be arranged in columns and rows, wherein each row extends in a first lateral direction (e.g., the X-direction) and each column extends in a second lateral direction (e.g., the Y-direction). For example, the vias **310** may be arranged in two rows and two columns. Although **FIG. 3** shows the number of vias **310** being four, the number of vias **310** may be higher or lower without departing from the scope of the present disclosure.

The top layer **302** may be spaced from the bottom layer **304,** in the vertical direction, by a spacing **316**. The spacing **316** may be greater than 1mm, which may cause a flatter magnetic field. In some embodiments the spacing **316** can be null or zero, which may result in the two coils being planar (i.e., co-planar). In some embodiments, the spacing **316** has a value in a range of 2.5mm to 4mm. In some embodiments, the spacing **316** has a value of approximately 3.2mm (e.g., 3.2mm +/- 0.2mm). It should be understood that alternative spacing of the layers **302** and **304** are possible and may provide alternative functional performance of the transmit inductor.

In some embodiments, the connection **300** is used for the connection **222** of **FIG. 2A,** the top layer **302** on which the turn **204b** resides, and the bottom layer **304** on which the turn **214a** resides. The connection **300** may be any connection between a portion, such as a coil, turn or overpass, of a transmit inductor, such as the transmit inductor **200a** or **200b,** in or on a first layer and a portion, such as a coil, turn, or underpass, of the transmit inductor in or on a second layer. It should be understood that alternative connection structures between the coils of the different layers may be utilized.

**WPT System Architecture**

The WPT system includes a transmitter, Tx coil, Rx coil, and receiver. The transmitter is composed by three main blocks, including (i) a power regulation section formed of a DC/DC converter and a negative feedback network or circuit used to regulate power provided by the system in cascade, (ii) a power conversion section that performs DC/AC conversion, and (iii) a Tx tank formed by a series of an inductor (L-Tx) and a capacitor (C-Tx).

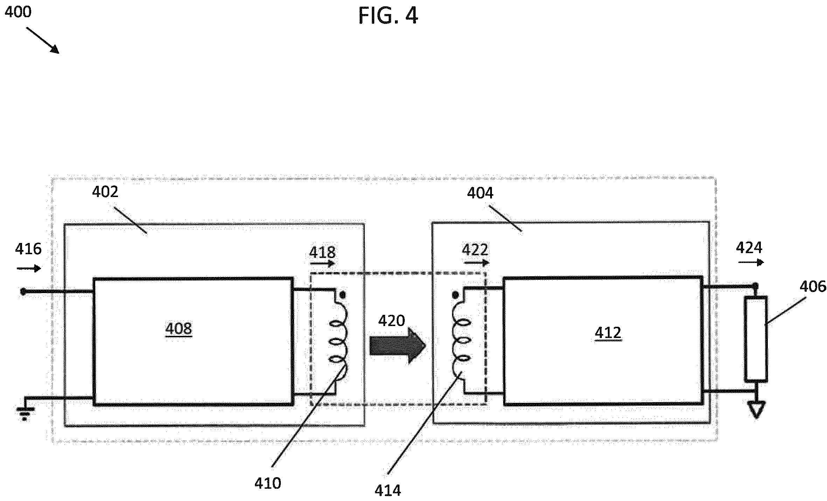

If the transmit and receive inductors (L-Tx and L-Rx) are magnetically coupled, then the AC current flowing inside L-Tx generates an AC voltage on L-Rx. The Rx section is composed of (i) an Rx tank formed by a series of an inductor (L-Rx) and capacitor (C-Rx), and (ii) a rectifier that performs an AC/DC conversion to deliver DC power to the load (e.g., rechargeable battery). Further details of the WPT system architecture are described herein below with regard to **FIGS. 4-6.**

**FIG. 4** is an illustration of a block diagram of a system **400** for transmitting a wireless power signal **420**. The system **400** includes a transmitter **402** and a receiver **404**. The transmitter **402** may be a part of the wireless charging device **102** and the receiver **404** may be a part of the wireless device **104**. The transmitter **402** may be electromagnetically coupled to inductively transfer a wireless power signal **420** to the receiver **404**. The transmitter **402** may include transmit circuitry **408** and a transmit inductor or coil(s) **410** electrically coupled to the transmit circuitry **408**. The transmit circuitry **408** may receive an input signal **416** and provide a power signal **418** to the transmit inductor **410**. The transmit inductor **410** may convert the power signal **418** to a wireless power signal **420** using electromagnetic principles, as understood in the art. The transmit inductor **410** may be electromagnetically coupled to cause the wireless power signal **420** to be inductively transferred to the receiver **404**. In some embodiments, the inductor **410** includes, or is a circuit model/representation of, one or more of the transmit inductor **106 (FIGS. 1A** and **1B),** the transmit inductor **200a (FIG. 2A),** or the transmit inductor **200b (FIG. 2B).**

The receiver **404** may include receive circuitry **412** and a receive inductor or coil(s) **414** electrically coupled to the receive circuitry **412**. The receive inductor **414** may be electromagnetically coupled to receive the wireless power signal **420** from the transmit inductor **410** as a power signal **422,** which may match the wireless power signal **420** or alter the wireless power signal **420** depending on functional parameters of the receive inductor **414** relative to the transmit inductor **410**. The power signal **422** is communicated from the receive inductor **414** to the receive circuitry **412,** which may provide an output signal **424** to a load **406**. In some embodiments, the receiver **404** includes the load **406**. The load **406** may be a rechargeable battery of an electronic device, for example.

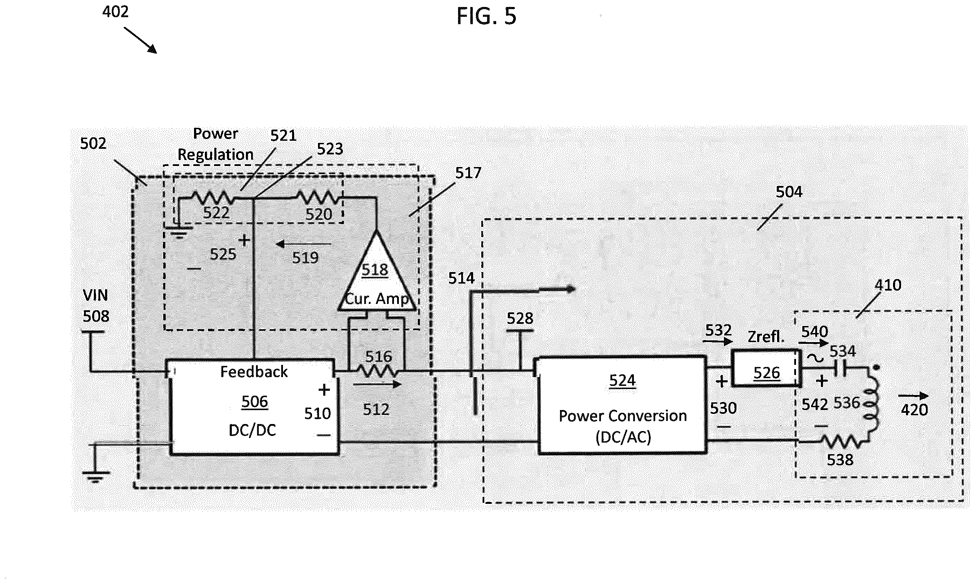

**FIG. 5** is a schematic of the transmitter **402** of **FIG. 4** of the wireless charging device **102** of **FIGS. 1A** and **1B.** The transmitter **402** may include a power regulation circuit (power regulator) **502** to regulate a power supply signal **508** and a power conversion circuit (power converter) **504** to convert a direct current (DC) signal, such as current signal **512,** to an alternating current (AC) signal, such as current signal **540**. The power regulation circuit **502** may include a power regulation core circuit or DC/DC circuit **506**. In some embodiments, the power regulation core circuit **506** may include an amplifier, a buck and/or boost converter, a low dropout (LDO) regulator, or any other suitable circuitry for regulating power. The power regulation core circuit **506** may receive a supply signal **508** (e.g., input supply voltage, unregulated supply voltage, etc.). The power regulation core circuit **506** outputs a regulated voltage **510** and the current signal **512**. The current signal **512** is a ratio of the regulated voltage **510** and a sum of the input impedance **514** presented to the power regulation core circuit **506** and a sensor resistor (R-sense) **516**. The input impedance **514** may include a resistance **538** of the transmit inductor **410,** the load impedance **526,** and all the resistive contribution of the power conversion core circuit or power conversion stage **524,** all of which are described in more detail below.

The power regulation circuit **502** may include a feedback circuit **517**. A feedback circuit **517** may include a current amplifier **518** that senses the current signal **512** flowing through the resistor **516**. The current amplifier **518** outputs an amplified voltage signal **519** that is a product of the voltage drop across the sense resistor **516,** which is proportional to the current signal **512** and a gain of the current amplifier **518**. The current amplifier **518** may be implemented as an operational amplifier, a complementary metal-oxide-semiconductor (CMOS) amplifier, or any amplifier suitable for amplifying the current signal **512**. The feedback circuit **517** may include a resistor or voltage divider **521** coupled to the current amplifier **518** to receive the amplified voltage signal **519** proportional to the current **512** and generate a voltage **525** at a node **523**. The resistor divider **521** may include a resistor **520,** the node **523** coupled to the resistor **520,** and a resistor **522** coupled to the node **523** and to ground. The node **523** may be coupled to the power regulation core circuit **506**. Thus, a feedback loop may be formed including the power regulation core circuit **506,** the sensor resistor **516,** and the feedback circuit **517.**

Based on feedback behavior, the power regulation core circuit **506** may adjust the regulated voltage **510** to maintain a constant or substantially constant value of the current signal **512.** Thus, the power regulation circuit **502** may regulate the current signal **512** under conditions in which the input impedance **514** is changing. For example, the power regulation circuit **502** may regulate the current **512** when the wireless device **104** moving closer to or further away from the wireless charging device **102,** when a battery of the wireless device **104** losing charge, or under other conditions that cause a change of the input impedance **514.** In some embodiments, maintaining the current signal **512** at a steady value avoids high current and thermal problems. Utilizing the power regulation circuit **502** as shown, no software control is needed to maintain the current signal **512** at a steady value. It should be understood that alternative configurations that include a processor that executes software to control the current signal **512** at a steady value may be utilized.

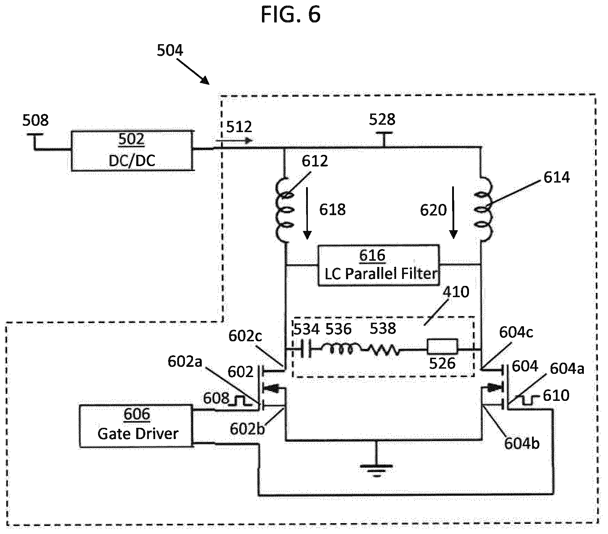

The power conversion circuit **504** may include a power conversion core circuit **524** coupled to the power regulation circuit **502,** the transmit inductor **410** (e.g., a circuit model of a transmit inductor), and a load impedance **526** (e.g., a circuit model of the load). The power conversion core circuit **524** receives the current signal **512** and a supply voltage **528.** In response, the power conversion core circuit **524** may generate a voltage **530** and a current signal **532.** The power conversion core circuit **524** is described in greater detail with respect to **FIG. 6.**

With further regard to **FIG. 5,** the transmit inductor **410** may include a capacitance **534** (e.g., parasitic capacitance), an inductance **536** (e.g., self-inductance), and a resistance **538** (e.g., parasitic resistance). The transmit inductor **410** receives an AC current signal **540** and a voltage **542** and generates the wireless power signal **420** therefrom. In some embodiments, the capacitance **534** includes capacitance of external capacitors (e.g., tank capacitors, filter capacitors, programmable capacitors, etc.) and the inductance **536** includes any external inductors (e.g., tank inductors, filter inductors, etc.).

The load impedance **526** may be an impedance presented to the transmit inductor **410** by the load **406** via the receiver **404.** The load impedance **526** may be referred to as the reflected load impedance or the sensed load impedance. The load impedance **526** may be at resonance condition when the frequency of the wireless power signal **420** is equal to, or substantially equal to, the resonance frequency of the transmitter and the receiver. The resonance frequency of the transmitter may be established when the inductance **536** of the transmit inductor **410** resonates with the capacitance **534** of the transmit inductor **410.** At resonance condition, the imaginary part of the load impedance **526** is equal to, or substantially equal to, zero. The resonance condition may be determined by equation 1 below:

$$(1) \quad Z_{REFLECTED} = \frac{\omega^2 \cdot k^2 \cdot L_{TX} \cdot L_{RX}}{R_{RX} + \frac{8}{\pi^2} \cdot R_{LOAD}} = \frac{\omega^2 \cdot M^2}{R_{RX} + \frac{8}{\pi^2} \cdot R_{LOAD}},$$

where $\omega$ is the angular frequency in radians per second, k is the coupling (0 < k < 1) between the transmit inductor **410** and the receive inductor **414,** $L_{TX}$ is the (self) inductance **536** of the transmit inductor **410,** $L_{RX}$ is the self-inductance of the receive inductor **414,** $R_{LOAD}$ is a resistance of the load **406,** and M is the mutual inductance.

In summary, using the resistor **516** (R-sense), current amplifier **518,** resistor divider **521** and negative feedback connection by the feedback circuit **517,** it is possible to drive the feedback node of the power regulation core circuit (DC/DC amplifier) **506** such that the output current **512** is a constant current. When the impedance **514** (Z-IN) changes, the DC/DC amplifier **506** changes the voltage output **510** (V-DC), thereby maintaining the output current **512** at a fixed current (I-DC current) value. That is, the current **512** resulting from a receive inductor of a wireless device being electromagnetically coupled to the transmit inductor may be sensed. This driving technique is allows for the WPT system to regulate the output power of the DC/DC amplifier **506** automatically under different load conditions. For example:

(i) wireless device receiver is placed on the wireless charging device (e.g., pad): the impedance Z-IN is given by the series of R-Tx and Re{Z-REFLECTED}; the DC/DC amplifier **506** fixes its power output to nominal V-DC and the power is delivered to the load; and

(ii) wireless device receiver is not placed on the wireless charging device: the impedance **514** (Z-IN) is given only by R-Tx, so to maintain the same output current **512** (I-DC current), the voltage output **510** (V-DC) goes down.

This process is effective because the process: (i) protects the power conversion core circuit **524** (DC/AC converter) when the receiver is not placed on the wireless charging device, thereby avoiding high current and thermal problems. When the wireless device receiver is placed on the wireless charging device, power is immediately deliver to the wireless device receiver because there is no communication link to be established as with conventional wireless power chargers.

**FIG. 6** is a circuit diagram of the power conversion circuit **504** of the transmitter **402** of the wireless charging device **102** to perform a DC/AC conversion. The power conversion circuit **504** may include a class D amplifier, such as a class D current mode amplifier or other amplifiers that can be driven with constant current. For example, the power conversion circuit **504** includes a transistor **602** and a transistor **604**. The transistors **602** and **604** may be in complementary configuration. The transistors **602** and **604** may be Gallium Nitride (GaN) transistors, Gallium Arsenide (GaAs) transistors, CMOS transistors, silicon on insulate (SOI) transistors, bipolar transistors, or any transistors suitable for class D amplifier operation. The transistors **602** and **604** may be coupled to a gate driver **606**. For example, a gate **602a** of the transistor **602** and a gate **604a** of the transistor **604** may be coupled to the gate driver **606**. The gate driver may generate and provide signals **608** and **610** (e.g., complementary square waves/pulses with 50% duty cycle) to the transistors **602** and **604,** respectively. The signals may cause the transistors **602** and **604** to switch ON and OFF with a frequency corresponding to a frequency of a waveform of the signals **608** and **610**. The transistors **602** and **604** may be coupled to ground. For example, a source **602B** of the transistor **602** and a source **604b** of the transistor **604** are coupled to ground.

The transistor **602** may be coupled to the supply voltage **528** and the current signal **512** via an inductor **612**. For example, a drain **602c** of the transistor **602** may be coupled to the inductor **612**. Similarly, the transistor **604** may be coupled to the supply voltage **528** and the current signal **512** via an inductor **614**. For example, a drain **604c** of the transistor **604** may be coupled to the inductor **614**. A filter **616** may be coupled in parallel with the transistors **602** and **604.** For example, the filter **616** may be coupled between the drain **602c** and the drain **604c**. The filter **616** may be one or more inductors in parallel or in series with one or more capacitors. In some embodiments, the filter **616** may be referred to as a tank filter or an LC tank filter. The capacitors of the filter **616** may be programmable capacitors to adjust the resonant frequency. The transmit inductor **410** may be coupled in parallel with the transistors **602** and **604**. For example, the transmit inductor **410** may be coupled between the drain **602c** and the drain **604c.** It should be understood that alternative circuitry may be utilized that performs the same or similar functionality as the power conversion circuit **504.**

In response to the transistors **602** and **604** switching, the current signal **512,** which is a DC current, is converted by the transistors **602** and **604** into current signals **618** and **620,** which are AC currents. The current signal **618** flows through the inductor **612** when the transistor **602** is ON and the current signal **620** flows through the inductor **614** when the transistor **604** is ON. The transmit inductor **410** and the filter **616** (e.g., along with the inductors **612** and **614)** resonate at, or substantially near, the frequency of operation (e.g., the frequency of the currents **618** and **620,** as well as the frequency at which the transistors **602** and **604** are switching). The currents **618** and **620** flow through the transmit inductor **410** to generate and inductively transfer the wireless power signal **420** to the receiver **404** of the wireless device **104.**

## Irregularly-Shaped Wireless Device

For irregularly-shaped wireless devices, the receiver may utilize a coil with a 3D shape, such that the coupling between the transmit inductor and receive inductor is high enough to ensure power transfer in every location and orientation of the irregularly-shaped wireless device when placed on the flat wireless charging device.

**FIG. 7A** is a perspective view of a portion of the wireless device **104** of **FIGS. 1A** and **1B,** which is non-planar. In this case, the portion is a head of a barcode scanner, often referred to as a scanner head, where a scanner head typically includes a window, housing, and optics disposed behind the window to output an illumination signal (e.g., laser beam, light, etc.) and receive reflections from the illumination signal onto optics and an optical sensor for capturing images of or signals from reflections off of a machine-readable indicia (e.g., barcode, QR code, etc.). A scanner head is often larger than a handle, which means that a housing that defines the scanner head includes walls and window frame that form the scanner head. The walls and window frame may define regions or pockets within which (i.e., next to the inside walls of the walls and window frame) receive coils, as further described herein, may be positioned.

The wireless device **104** includes a barcode scanner. The wireless device **104** includes a receive coil **702**. The receive coil **702** is two-dimensional and extends in a first plane defined by a first direction (e.g., Z-direction) and a second direction (X-direction). The receive coil **702** is disposed within a device housing **107**. The receive coil **702** may be disposed behind, or otherwise adjacent to, a frontal surface **108**. In some embodiments, the frontal surface **108** extends in parallel, or substantially parallel, with a first plane. In some embodiments, the frontal surface **108** is less than a predetermined distance (e.g., 1mm, 3mm, or 1cm) from the receive coil **702**.

The wireless device **104** also includes a receive coil **704**. The receive coil **704** is spaced apart from the receive coil **702**. The receive coil **704** extends in a second plane defined by the first direction (e.g., Z-direction) and a third direction (Y-direction). The second plane is different from (e.g., at an angle with) the first plane. The first plane, the second plane, and the third plane may be at different planar angles from one another. In some embodiments, the second plane is perpendicular to the first plane. The receive coil **704** is disposed within the device housing **107**. The receive coil **704** may be disposed behind, or otherwise adjacent to, the lateral surface **110a**. In some embodiments, the lateral surface **110a** extends in parallel, or substantially parallel, with the second plane. In some embodiments, the lateral surface **110a** is less than a predetermined distance (e.g., 1mm, 3mm, or 1cm) from the receive coil **704.**

The wireless device **104** may also include a receive coil **706**. The three receive coils **702, 704,** and **706** may be collectively referred to as a receive inductor, where the receive coil **702** may be inductively coupled to a transmit inductor when parallel therewith, and the receive coils **704** and **706** are inductively coupled to the transmit inductor when parallel therewith due to the orientations of the coils **702-706** within the frontal surface **108** and lateral surfaces **110.** The receive coil **706** may be spaced apart from the receive coil **702.** The receive coil **706** may be disposed physically opposite the receive coil **702** from the receive coil **704** within the device housing **107** and adjacent to the lateral surface **110b.** The receive coil **706** may extend in a third plane defined by the first direction (e.g., Z-direction) and a fourth direction. The second plane may be different from (e.g., at an angle with) the first plane. The second plane may be alternatively be parallel with the first plane. The lateral surface **708** may be less than a predetermined distance from the receive coil **706.**

Each of the receive coils **702-706** may resonate at a resonant frequency. In some embodiments, the resonant frequency is in an ISM frequency and centered at 6.78MHz. In some embodiments, each of the receive coils **702-706** resonates with respective capacitors (e.g., parasitic capacitors, external capacitors, filter capacitors, programmable capacitors, etc.). The receive coils **702-706** may inductively receive the wireless power signal **420** from the transmit inductor **410** (e.g., the transmit coils **204** and **214** or the transmit coils **254** and **264)** of the wireless charging device **102.**

**FIG. 7B** is a perspective view of the wireless device **104** with coils **704** and **706** connected in anti-series. **FIG. 7B** shows magnetic field **709** (e.g., magnetic flux) flowing through the receive coil **704** and the receive coil **706.** The magnetic field projected in the direction of the z-axis **709** may be a result of the wireless power signal **420** being inductively transferred by the transmit inductor **410.** A magnetic field **709** may induce a current **710** through the receive coil **704** and a current **712** through the receive coil 706. The receive coil **704** may include terminals **714** and **716.** The current **710** may enter the receive coil **704** through the terminal **714** and exit the receive coil **704** through the terminal **716.** The receive coil **706** may include terminals **718** and **720.** The current **712** may enter the receive coil **706** through the terminal **718** and exit the receive coil **706** through the terminal **720.** The receive coils **704** and **706** may be coupled in anti-series. That is, a terminal through which one of the currents is entering a receive coil may be coupled to a terminal through which another of the currents is exiting a receive coil. For example, the terminal 716 may be electrically coupled to the terminal 718 by a connection **722.**

In general, the principles described herein may have a number of different configurations, including two, three, or more coils. In a case of two coils, the coils are placed in two distinct planes, where the planes may be parallel to each other. Alternatively, the planes may be at different planar angles, and in this case, the angle may also be 90 degrees (i.e., perpendicular). In case of three coils, the coils may be placed on three different planes, where the planes of **704** and 706 may be parallel with each other. Other planar angles may be utilized, as well. Planes **702** and **706** may be perpendicular, but also non-perpendicular (i.e., planes placed at different planar angle). Planes **702** and **704** may be perpendicular, but also non-perpendicular (i.e., planes placed at different planar angle).

## Wireless Device Receiver

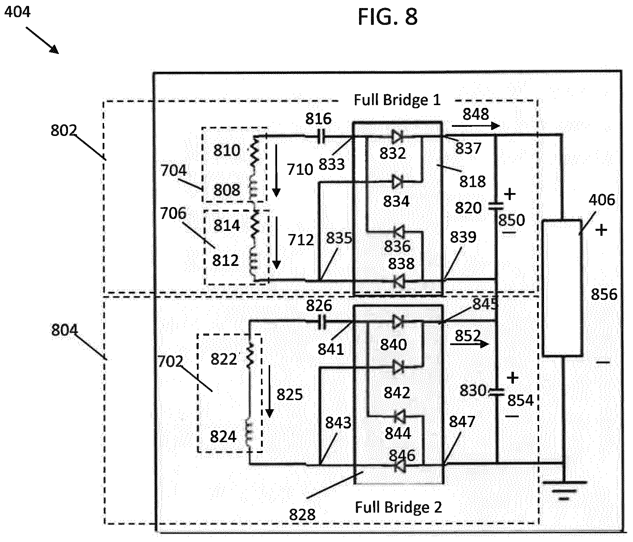

**FIG. 8** is a circuit diagram of the receiver **404** of the wireless device **104.** The receiver **404** may include a sub-receiver **802** for the receive coils **704** and **706,** a sub-receiver **804** for the receive coil **702,** and the load **406.** The sub-receiver **802** may include the receive coil **704** and the receive coil **706** coupled in anti-series with the receive coil **704,** as described in **FIG. 7B.** The receive coil **704** may include an inductance **808** and a resistance **810.** The receive coil **706** may include an inductance **812** and a resistance **814.** The sub-receiver **802** may include a capacitance **816** coupled in series with the receive coils **704** and **706.** The capacitance **816** may include one or more of a capacitance of the receive coils **704** and **706** or a capacitance of external capacitors.

The sub-receiver **802** may include a rectifier **818.** The rectifier **818** may include a diode bridge or any other rectifier type (e.g., a Graetz bridge rectifier), a rectifier using a center tap transformer and two diodes, or any configuration suitable for rectifying an AC signal. As shown in **FIG. 8,** the rectifier **818** may be a diode bridge that include diodes **832, 834, 836,** and **838,** input terminals **833** and **835,** and output terminals **837** and **839.** The input terminal **833** is coupled to the receive coil **704** or an external capacitor. The input terminal **835** is coupled to the receive coil **706.** An anode of the diode **832** and a cathode of the diode **836** are coupled to the input terminal **833.** An anode of the diode **834** and a cathode of the diode **838** are coupled to the input terminal **835.** A cathode of the diode **832** and a cathode of the diode **834** are coupled to the output terminal **837.** An anode of the diode **836** and an anode of the diode **838** are coupled to the output terminals **839.**

The sub-receiver **802** may include a capacitor **820** coupled in parallel with the rectifier **818.** The capacitor **820** may be coupled on one side to the output terminal **837** and on the other side to the output terminal **839.** The output terminal **837** may be coupled to one side of the load 406 and the output terminal **839** may be coupled to the sub-receiver **804.**

The sub-receiver **804** includes the receive coil **702.** The receive coil **702** may include an inductance **822** and a resistance **824.** The sub-receiver **804** may include a capacitance **826** coupled in series with the receive coil **702.** The capacitance **826** may include one or more of a capacitance of the receive coil **702** or a capacitance of external capacitors.

The sub-receiver **804** may include a rectifier **828.** The rectifier **828** may include a diode bridge or any other rectifier type (e.g., a Graetz bridge rectifier), a rectifier using a center tap transformer and two diodes, or any configuration suitable for rectifying an AC signal. As shown in **FIG. 8,** the rectifier **828** may be a diode bridge that include diodes **840, 842, 844,** and **846,** input terminals **841** and **843,** and output terminals **845** and **847.** The input terminal **841** is coupled to the receive coil **702** or an external capacitor. The input terminal **843** is coupled to the receive coil **702.** An anode of the diode **840** and a cathode of the diode **846** are coupled to the input terminal **841**. An anode of the diode **842** and a cathode of the diode **846** are coupled to the input terminal **843**. A cathode of the diode **840** and a cathode of the diode **842** are coupled to the output terminal **845**. An anode of the diode **844** and an anode of the diode **846** are coupled to the output terminals **847**.

The sub-receiver **804** may include a capacitor **830** coupled in parallel with the rectifier **828**. The capacitor **830** may be coupled on one side to the output terminal **845** and on the other side to the output terminal **847**. The output terminal **847** may be coupled to one side of the load **406** and the output terminal **845** may be coupled to the output terminal **839** of the sub-receiver **802**. Thus, the load **406** may be coupled in parallel with the two sub-receivers **802** and **804** connected in series.

In operation, a magnetic field traveling through the parallel receive coils **704** and **706** may induce a current **710** through the receive coil **704** and a current **712** through the receive coil **706**. Because the receive coils **704** and **706** are coupled in anti-series, the current signals **710** and **712** may add (e.g., interact constructively) to each other instead of subtract (e.g., interact destructively) from each other. The sum of the current signals **710** and **712** includes an AC current. The rectifier **818** may receive the sum of the current signals **710** and **712** and convert the sum of the currents **710** and **712** (e.g., an AC current) into the current signal **848,** which is a rectified current. The current signal **848** may charge the capacitor **820** to generate a DC voltage 850 across the capacitor **820**.

Similarly, a magnetic field traveling through the receive coil **702** may induce a current **825** through the receive coil **702**. The current **825** includes an AC current. The rectifier **818** may receive the current **825** and convert the current **825** into the current **852**, which is a rectified current. The current **852** may charge the capacitor **830** to generate a DC voltage **854** across the capacitor **830**. In some embodiments, a voltage **856** across the load **406** is a sum of the voltage **850** of the sub-receiver **802** and the voltage **854** of the sub-receiver **804**.

If the receive coil **702** is parallel to a transmit coil for wireless power transfer, the receive coil **702** receives a magnetic field and the receive coils **704** and **706** do not receive a magnetic field. If the receive coil **702** is perpendicular to the transmit coil during wireless power transfer, the receive coils **704** and **706** receive a magnetic field and the receive coil **702** does not receive a magnetic field. In some embodiments, the receive coils **704** and **706** receive a first magnetic field and the receive coil **702** receives a second magnetic field.

The present disclosure includes embodiments of a method of operating the wireless device **104**. The receive coil **702** may receive the wireless power signal **420** from the wireless charging device **102** responsive to the wireless device **104** being oriented in a first position (e.g., with respect to the wireless charging device **102**). The first position may include the receive coil **702** being disposed substantially in parallel with the transmit inductor **410** of the wireless charging device **102**. The first position may include that the receive coil **702** being within a predetermined distance (e.g., 1mm, 3mm, or 1cm, 3cm, or 10cm) of the transmit inductor **410** of the wireless charging device **102**.

The receive coil **704** may receive the wireless power signal **420** from the wireless charging device **102** responsive to the wireless device **104** being oriented in a second position (e.g., with respect to the wireless charging device **102**). The second position may include the receive coil **704** being disposed substantially in parallel with the transmit inductor **410** of the wireless charging device **102**. The second position may include that the receive coil **704** being within a predetermined distance (e.g., 1 mm, 3 mm, or 1 cm, 3 cm, or 10 cm) of the transmit inductor **410** of the wireless charging device **102**.

The receive coil **706** may receive the wireless power signal **420** from the wireless charging device **102** responsive to the wireless device **104** being oriented in a third position (e.g., with respect to the wireless charging device **102**). The third position may include the receive coil **706** being disposed substantially in parallel with the transmit inductor **410** of the wireless charging device **102**. The third position may include that the receive coil **706** being within a predetermined distance (e.g., 1 mm, 3 mm, 1 cm, 3 cm, or 10 cm) of the transmit inductor **410** of the wireless charging device **102**.

In some embodiments, multiple receive coils may receive the wireless power signal **420** from the wireless charging device. For example, the receive coils **704** and **706** may receive the wireless power signal **420** from the wireless charging device **102** responsive to the wireless device **104** being oriented in a fourth position (e.g., with respect to the wireless charging device **102**). The fourth position may include the receive coils **704** and **706** being disposed substantially in parallel with the transmit inductor **410** of the wireless charging device **102**. The fourth position may include that the receive coils **704** and **706** being within a predetermined distance (e.g., 1 mm, 3 mm, 1 cm, 3 cm, or 10 cm) of the transmit inductor **410** of the wireless charging device **102**.

The foregoing method descriptions and the process flow diagrams are provided merely as illustrative examples and are not intended to require or imply that the steps of the various embodiments must be performed in the order presented. As will be appreciated by one of skill in the art the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be re-arranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the principles of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware may be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments. Thus, the present invention is not intended to be limited to the embodiments shown herein but is to be accorded the widest scope consistent with the following claims and the principles and novel features disclosed herein.

The previous description is of a preferred embodiment for implementing the invention, and the scope of the invention should not necessarily be limited by this description. The scope of the present invention is instead defined by the following claims.

**Claims**

1. A wireless barcode scanner device (104) comprising:

   a device housing (107) including a head,
   the head including a first surface and a second surface, the first surface being distinct from the second surface;
   a first receive coil (702) extending in a first plane in alignment with the first surface; and
   a second receive coil (704) spaced apart from the first receive coil, the second receive coil extending in a second plane different from the first plane and aligned with the second surface, the first and
   second coils (702, 704) being configured to inductively receive wireless power signals (420).

2. The wireless barcode scanner device (104) of claim 1, wherein the second plane is perpendicular to the first plane or is oriented in parallel with the first plane.

3. The wireless barcode scanner device (104) of claim 1, wherein the second plane is oriented in parallel with the first plane, and the first and second coils (702, 704) are electrically coupled in anti-series such that the currents (710, 712) induced in the first and second coils (702, 704) add constructively.

4. The wireless barcode scanner device (104) of claim1, wherein the first surface is a frontal surface (108) and the second surface is a lateral surface (110, 110a, 110b).

5. The wireless barcode scanner device (104) of any of previous claims, wherein the head of the device housing (107) further includes a third surface; and the wireless device barcode scanner further comprises a third receive coil (706) spaced apart from the first receive coil and in alignment with the third surface of the device housing (107), the third receive coil extending in a third plane different from the first and second planes and configured to inductively receive wireless power signals (420).

6. The wireless barcode scanner device (104) of claim 5, wherein the head of the device housing (107) encloses the first, second, and third receive coils (702, 704, 706), and wherein:

the first surface is substantially parallel with the first plane;
the second surface is mechanically coupled to the first surface, and is substantially parallel with the second plane; and
the third surface is mechanically coupled to the first surface, and is opposite the first surface from the second surface, and wherein the third surface is substantially parallel with the third plane.

7. The wireless barcode scanner device (104) of claim 6, wherein the second and third coils (704, 706) are electrically coupled in anti-series such that the currents (710, 712) induced in the second and third coils (704, 706) add constructively.

8. The wireless barcode scanner (104) of claim 5, wherein the first surface is the frontal surface (108), the second and third surfaces are lateral surfaces (110, 110a, 110b).

9. A wireless power transfer system comprising a wireless barcode scanner device (104) according to any of claims 1-8 and a wireless charging device (102) for powering the wireless barcode scanner device (104), the wireless charging device (102) comprising:

a first transmit coil (204, 254) disposed on a first layer, the first transmit coil having an outer dimension (202, 252); and
a second transmit coil (214, 264) disposed on a second layer, the second transmit coil being electrically coupled to the first transmit coil (204, 254), the first and second transmit coils (204, 254, 214, 264) forming a transmit inductor (200a, 200b) to inductively transfer a wireless power signal (420).

10. The wireless power transfer system of claim 9, wherein the wireless charging device (102) further comprises a power regulation circuit (502) in electrical communication with the first and second transmit coils (204, 254, 214, 264), wherein the power regulation circuit (502) is configured to sense a current (512) resulting from a receive inductor (414) of the wireless barcode scanner device (104) being electromagnetically coupled to the transmit inductor (410).

11. The wireless power transfer system of claim 9 or 10, wherein the first (204, 254) and second (214, 264) transmit coils include at least a center turn (214b) and an outside turn (204a), wherein the distance between adjacent turns (204a, 204b, 214a, 214b) increases from the outside turn (204a) moving towards the center turn (214b).

12. The wireless power transfer system of any of claims 9-11, wherein the first layer and the second layer are vertically aligned.

13. The wireless power transfer system of any of claims 9-12, wherein the second transmit coil (214, 264) has an inner dimension (212, 262) that is greater than the outer dimension (210, 260) of the first transmit coil (204, 254).

14. The wireless power transfer system of any of claims 9-13, wherein the second transmit coil (214, 264) is concentrically aligned with the first transmit coil (204, 254).

**Patentansprüche**

1. Drahtlose Barcode Abtastvorrichtung (104) umfassend:

   ein Vorrichtungsgehäuse (107) umfassend einen Kopf,
   der Kopf umfasst eine erste Oberfläche und eine zweite Oberfläche, wobei die erste Oberfläche von der zweiten Oberfläche verschieden ist;
   eine erste Empfangsspule (702), die sich in einer ersten Ebene in Ausrichtung mit der ersten Oberfläche erstreckt; und
   eine zweite Empfangsspule (704), die von der ersten Empfangsspule beabstandet ist, wobei sich die zweite Empfangsspule in einer zweiten Ebene erstreckt, die sich von der ersten Ebene unterscheidet und die mit der zweiten Oberfläche ausgerichtet ist, wobei die erste und
   die zweite Spulen (702, 704) konfiguriert sind, die drahtlosen Stromsignale (420) induktiv zu empfangen.

2. Drahtlose Barcode Abtastvorrichtung (104) nach Anspruch 1, wobei die zweite Ebene senkrecht zu der ersten Ebene ist oder parallel zu der ersten Ebene ausgerichtet ist.

3. Drahtlose Barcode Abtastvorrichtung (104) nach Anspruch 1, wobei die zweite Ebene parallel zur ersten Ebene ausgerichtet ist und die erste und die zweite Spule (702, 704) elektrisch in Antireihe gekoppelt sind, so dass sich die in der ersten und der zweiten Spule (702, 704) induzierten Ströme (710, 712) konstruktiv addieren.

4. Drahtlose Barcode Abtastvorrichtung (104) nach Anspruch 1, wobei die erste Oberfläche eine Vorderfläche (108) ist und die zweite Oberfläche eine Seitenfläche (110, 110a, 11 0b) ist.

5. Drahtlose Barcode Abtastvorrichtung (104) nach einem der vorhergehenden Ansprüche, wobei der Kopf des Vorrichtungsgehäuses (107) ferner eine dritte Oberfläche aufweist; und die drahtlose Barcode Abtastvorrichtung ferner eine dritte Empfangsspule (706) aufweist, die von der ersten Empfangsspule beabstandet ist und mit der dritten Oberfläche des Vorrichtungsgehäuses (107) ausgerichtet ist, wobei sich die dritte Empfangsspule in einer dritten Ebene erstreckt, die sich von der ersten und zweiten Ebene unterscheidet, und konfiguriert ist, drahtlose Stromsignale (420) induktiv zu empfangen.

6. Drahtlose Barcode Abtastvorrichtung (104) nach Anspruch 5, wobei der Kopf des Vorrichtungsgehäuses (107) die erste, zweite und dritte Empfangsspule (702, 704, 706) umschließt, und wobei:

   die erste Fläche im Wesentlichen parallel zur ersten Ebene liegt;
   die zweite Fläche mechanisch mit der ersten Fläche gekoppelt ist und im Wesentlichen parallel zur zweiten Ebene liegt; und
   die dritte Fläche mechanisch mit der ersten Fläche gekoppelt ist und der ersten Fläche in Bezug auf die zweite Fläche gegenüberliegt, und wobei die dritte Fläche im Wesentlichen parallel zu der dritten Ebene ist.

7. Drahtlose Barcode Abtastvorrichtung (104) nach Anspruch 6, wobei die zweite und die dritte Spule (704, 706) elektrisch in Antireihe gekoppelt sind, so dass sich die in der zweiten und dritten Spule (704, 706) induzierten Ströme (710, 712) konstruktiv addieren.

8. Drahtloser Barcode Abtaster (104) nach Anspruch 5, wobei die erste Fläche die Vorderfläche (108) ist und die zweite und dritte Fläche Seitenflächen (110, 110a, 110b) sind.

9. Drahtloses Stromübertragungssystem, das eine drahtlose Barcode Abtastvorrichtung (104) nach einem der Ansprüche 1-8 und eine drahtlose Ladevorrichtung (102) zur Stromversorgung der drahtlosen Barcode Abtastvorrichtung (104) umfasst, wobei die drahtlose Ladevorrichtung (102) umfasst:

   eine erste Sendespule (204, 254), die auf einer ersten Schicht angeordnet ist, wobei die erste Sendespule eine Außenabmessung (202, 252) aufweist; und
   eine zweite Sendespule (214, 264), die auf einer zweiten Schicht angeordnet ist, wobei die zweite Sendespule elektrisch mit der ersten Sendespule (204, 254) gekoppelt ist, wobei die erste und die zweite Sendespule (204, 254, 214, 264) einen Sendeinduktor (200a, 200b) bilden, um ein drahtloses Stromsignal (420) induktiv zu übertragen.

**10.** Drahtloses Stromübertragungssystem nach Anspruch 9, wobei die drahtlose Ladevorrichtung (102) ferner eine Stromeinstellungsschaltung (502) in elektrischer Verbindung mit der ersten und zweiten Sendespule (204, 254, 214, 264) umfasst, wobei die Stromeinstellungsschaltung (502) konfiguriert ist, einen Strom (512) zu erfassen, der aus einer Empfangsspule (414) der drahtlosen Barcode Abtastvorrichtung (104) resultiert, die elektromagnetisch mit dem Sendeinduktor (410) gekoppelt ist.

**11.** Drahtloses Stromübertragungssystem nach Anspruch 9 oder 10, wobei die erste (204, 254) und die zweite (214, 264) Sendespulen mindestens eine Mittelwindung (214b) und eine Aussenwindung (204a) aufweisen, wobei der Abstand zwischen benachbarten Windungen (204a, 204b, 214a, 214b) von der Aussenwindung (204a) in Richtung der Mittelwindung (214b) zunimmt.

**12.** Drahtloses Stromübertragungssystem nach einem der Ansprüche 9-11, wobei die erste Schicht und die zweite Schicht vertikal ausgerichtet sind.

**13.** Drahtloses Stromübertragungssystem nach einem der Ansprüche 9-12, wobei die zweite Sendespule (214, 264) eine Innenabmessung (212, 262) aufweist, die größer als die Aussenabmessung (210, 260) der ersten Sendespule (204, 254) ist.

**14.** Drahtloses Stromübertragungssystem nach einem der Ansprüche 9-13, wobei die zweite Sendespule (214, 264) konzentrisch mit der ersten Sendespule (204, 254) ausgerichtet ist.


**Revendications**

**1.** Scanner de codes-barres sans fil (104) comprenant :

un boîtier de dispositif (107) comprenant une tête,
la tête comprenant une première surface et une deuxième surface, la première surface étant distincte de la deuxième surface ;
une première bobine de réception (702) s'étendant dans un premier plan en alignement avec la première surface ; et
une deuxième bobine de réception (704) espacée de la première bobine de réception, la deuxième bobine de réception s'étendant dans un deuxième plan différent du premier plan et aligné avec la deuxième surface, la première et la deuxième bobines (702, 704) sont configurées pour recevoir par induction des signaux de puissance sans fil (420).

**2.** Scanner de codes-barres sans fil (104) selon la revendication 1, dans lequel le deuxième plan est perpendiculaire au premier plan ou est orienté parallèlement au premier plan.

**3.** Scanner de codes-barres sans fil (104) selon la revendication 1, dans lequel le deuxième plan est orienté parallèlement au premier plan, et les première et deuxième bobines (702, 704) sont électriquement couplées en anti-série de sorte que les courants (710, 712) induits dans les première et deuxième bobines (702, 704) s'additionnent de manière constructive.

**4.** Scanner de codes-barres sans fil (104) selon la revendication 1, dans lequel la première surface est une surface frontale (108) et la deuxième surface est une surface latérale (110, 110a, 110b).

**5.** Scanner de codes-barres sans fil (104) selon l'une quelconque des revendications précédentes, dans lequel la tête du boîtier du dispositif (107) comprend en outre une troisième surface ; et le scanner de codes-barres sans fil comprend en outre une troisième bobine de réception (706) espacée de la première bobine de réception et alignée avec la troisième surface du boîtier du dispositif (107), la troisième bobine de réception s'étendant dans un troisième plan différent du premier et du deuxième plan et configurée pour recevoir par induction des signaux de puissance sans fil (420).

**6.** Scanner de codes-barres sans fil (104) selon la revendication 5, dans lequel la tête du boîtier du dispositif (107) renferme les première, deuxième et troisième bobines de réception (702, 704, 706), et dans lequel :

la première surface est sensiblement parallèle au premier plan ;

la deuxième surface est couplée mécaniquement à la première surface et est sensiblement parallèle au deuxième plan ; et

la troisième surface est couplée mécaniquement à la première surface, et est opposée à la première surface par rapport à la deuxième surface, et dans laquelle la troisième surface est sensiblement parallèle au troisième plan.

7. Scanner de codes-barres sans fil (104) selon la revendication 6, dans lequel les deuxième et troisième bobines (704, 706) sont couplées électriquement en anti-série de sorte que les courants (710, 712) induits dans les deuxième et troisième bobines (704, 706) s'additionnent de manière constructive.

8. Scanner de codes-barres sans fil (104) selon la revendication 5, dans lequel la première surface est la surface frontale (108), les deuxième et troisième surfaces sont des surfaces latérales (110, 110a, 110b).

9. Système de transfert d'énergie sans fil comprenant un scanner de codes-barres sans fil (104) selon l'une quelconque des revendications 1 à 8 et un dispositif de charge sans fil (102) pour alimenter le scanner de codes-barres sans fil (104), le dispositif de charge sans fil (102) comprenant :

une première bobine d'émission (204, 254) disposée sur une première couche, la première bobine d'émission ayant une dimension extérieure (202, 252) ; et

une deuxième bobine d'émission (214, 264) disposée sur une deuxième couche, la deuxième bobine d'émission étant couplée électriquement à la première bobine d'émission (204, 254), les première et deuxième bobines d'émission (204, 254, 214, 264) formant un inducteur d'émission (200a, 200b) pour transférer par induction un signal de puissance sans fil (420).

10. Système de transfert d'énergie sans fil selon la revendication 9, dans lequel le dispositif de chargement sans fil (102) comprend en outre un circuit de régulation d'énergie (502) en communication électrique avec les première et deuxième bobines d'émission (204, 254, 214, 264), dans lequel le circuit de régulation d'énergie (502) est configuré pour détecter un courant (512) résultant d'un inducteur de réception (414) du dispositif de scanner de codes-barres sans fil (104) couplé électromagnétiquement à l'inducteur d'émission (410).

11. Système de transfert d'énergie sans fil selon la revendication 9 ou 10, dans lequel la première (204, 254) et la deuxième (214, 264) bobines d'émission comprennent au moins un tour central (214b) et un tour extérieur (204a), la distance entre les tours adjacents (204a, 204b, 214a, 214b) augmentant du tour extérieur (204a) vers le tour central (214b).

12. Système de transfert d'énergie sans fil selon l'une quelconque des revendications 9 à 11, dans lequel la première couche et la seconde couche sont alignées verticalement.

13. Système de transfert d'énergie sans fil selon l'une quelconque des revendications 9 à 12, dans lequel la deuxième bobine d'émission (214, 264) a une dimension intérieure (212, 262) supérieure à la dimension extérieure (210, 260) de la première bobine d'émission (204, 254).

14. Système de transfert d'énergie sans fil selon l'une quelconque des revendications 9 à 13, dans lequel la deuxième bobine d'émission (214, 264) est concentriquement alignée avec la première bobine d'émission (204, 254).

FIG. 1A

FIG. 1B

EP 4 199 307 B1

FIG. 2A

200A

EP 4 199 307 B1

FIG. 2B

EP 4 199 307 B1

EP 4 199 307 B1

FIG. 3

FIG. 4

FIG. 5

EP 4 199 307 B1

FIG. 6

EP 4 199 307 B1

FIG. 7A

FIG. 7B

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014102883 A
- US 2014197694 A
- WO 2017126419 A
- US 9270342 B